# EUROPEAN PATENT SPECIFICATION

(11) **EP 0 812 336 B1**
(45) Date of publication and mention of the grant of the patent: **04.09.2002**
(21) Application number: 96910353.0
(22) Date of filing: 27.02.1996
(51) Int. Cl.: C08G 18/28, C09D 175/04

(54) **COATING COMPOSITION BASED ON A BINDER CONTAINING HYDROXYL GROUPS, AND ITS USE IN PROCESSES FOR THE PRODUCTION OF COATINGS**
BESCHICHTUNGSZUSAMMENSETZUNG AUF BASIS VON HYDROXYLGRUPPEN ENTHALTENDEN BINDEMITTELN UND IHRE VERWENDUNG IN VERFAHREN ZUR HERSTELLUNG VON BESCHICHTUNGEN
COMPOSITION DE REVETEMENT A BASE DE LIANT CONTENANT DES GROUPES HYDROXYLE ET SON UTILISATION DANS DES PROCEDES DE PRODUCTION DE REVETEMENTS

(30) Priority: 28.02.1995 US 396027; 28.02.1995 US 396028; 28.02.1995 US 396029; 28.02.1995 US 396030
(43) Date of publication of application: 17.12.1997
(73) Proprietor: BASF CORPORATION, Mount Olive, New Jersey 07828-1234 (US)
(72) Inventor: SHEPLER, Stewart, Bowling Green, OH 43402 (US); RUBBERT, Bernhard, Farmington, MI 48336 (US); BORGHOLTE, Harald, D-48151 Münster (DE); HALLMANN, Olaf, D-48165 Münster (DE); PERISSE, Philip, 60200 Compiegne (FR); TYE, Anthony, Waterville, OH 43566 (US); BAJC, Gerald, Perrysburg, OH 43551 (US)
(74) Representative: Fitzner, Ulrich, Dr.
(86) International application number: US9602794
(87) International publication number: WO96026969

(56) References cited:
- EP-A- 0 532 899
- GB-A- 954 179
- DATABASE WPI Week 8119 Derwent Publications Ltd., London, GB; AN 81-33237D XP002008670 & JP,A,56 026 962 (ASAHI) , 16 March 1981
- DATABASE WPI Week 8003 Derwent Publications Ltd., London, GB; AN 80-04353C XP002008671 & JP,A,54 153 900 (ASAHI) , 4 December 1979
- DATABASE WPI Week 8317 Derwent Publications Ltd., London, GB; AN 83-40090K XP002008672 & JP,A,58 045 218 (SUMITOMO) , 16 March 1983

## Description

The present invention relates to a coating composition which comprises
(A) at least one binder containing hydroxyl groups, and
(B) at least one crosslinking agent.

The present invention also relates to processes for the production of protective and/or decorative coatings on a substrate surface and to the use of the coating compositions in the area of automotive refinishing.

DE-A-40 24 204 has already disclosed coating compositions which contain, as binder, a polyacrylate resin which contains hydroxyl groups and has been prepared in the presence of a polyester which contains hydroxyl groups. However, especially when these coating compositions are applied at low temperatures, from about 8 to 12°C, the masking resistance and solvent resistance of the resulting coatings is in need of improvement.

In the area of the finishing of large-size vehicles, for example the finishing of goods-vehicle bodies, the masking resistance of the resulting coatings is of particular importance. This is because large-size vehicles are commonly provided with written characters, whose application requires the adjacent area to be masked off. If the masking resistance is inadequate, the marks must be removed by hand, by laborious sanding and polishing, which entails a considerable financial outlay.

Furthermore, the coating compositions must also cure as rapidly as possible, in order to avoid excessive standing times between the individual operations in the coating plant. These coating compositions must also, of course, possess good application properties and lead to coatings having good mechanical properties.

DE-A-31 33 769 discloses that the curing rate of coating compositions based on amines and on compounds containing isocyanate groups can be increased by the addition of benzoic acid. In DE-A-31 33 769 no description is given of coating compositions based on binders containing hydroxyl groups and on crosslinking agents containing isocyanate groups.

US-A-3,897,396 discloses that the curing rate of molding compositions based on polyurethane-ureas can be increased by the addition of alkyl- or alkoxyben2oic acid, without thereby shortening the pot life.

The molding compositions known from US-A-3,897,395 contain as crosslinking agents polyamines and as binders prepolymers which are based on reaction products of a polyetherpolyol, polyesterpolyol or hydrocarbon-polyol with isocyanates.

Finally, DE-A-44 07 409 discloses coating compositions containing a polyacrylate resin, which contains hydroxyl groups and is based on hydroxy-n-butyl acrylate, and a crosslinking agent. The preparation of the polyacrylate resin in the presence of a polyester resin, however, is not described in this application.

The document EP-A-0532899 discloses a polyacrylate resin containing hydroxyl groups, a polyisocyanate and a pot life extending amount of a polyanhydride. The polyacrylate comprises hydroxyethylmethacrylate. The documents JF-A-54153900/Derwent:80-04353C and JP-A-790102514/Derwent:81-33237D disclose coating compositions containing e.g. an acrylic polyol, a polyisocyanate and benzoic or phtalic acid. The document GB-A-954179 discloses the use of carboxylic acid anhydride in a polyesterol/diisocyanate system.

The technical problem underlying the present invention is to provide coating compositions which exhibit rapid drying coupled with a long pot life, i.e. which can be processed in the ready-to-use state over a long period. In particular, the coating compositions should provide a masking resistance of the resulting coatings which is improved in comparison with that of conventional coating compositions. Furthermore, the coating compositions should at least meet the requirements conventionally placed on a topcoat or clearcoat. The coating compositions should therefore, for example, exhibit good spray-mist assimilation, good topcoat holdout and good leveling. In addition, they should lead to coatings having good solvent resistance and a high degree of surface hardness. Furthermore, the coating compositions should cure at room temperature or at slightly elevated temperature, so that they can be employed in automotive refinishing.

The technical problem underlying the present invention is surprisingly solved by providing a coating compositions comprising as a component (A)
(A1)at least one hydroxy group containing polyester or alkyd resin and
(A2)at least one binder containing hydroxyl groups being a polyacrylate resin obtainable by polymerizing
   (a) from 5 to 50% by weight of one or more monomers selected from the group consisting of 4-hydroxy-n-butyl acrylate, 4-hydroxy-n-butyl methacrylate, 3-hydroxy-n-butyl acrylate, and/or 3-hydroxy-n-butyl methacrylate,
   (b) from 0 to 50% by weight of an ethylenically unsaturated, copolymerizable monomer which is not (a) and contains hydroxyl groups, or a mixture of such monomers,
   (c) from 5 to 95% by weight of an aliphatic and/or cycloaliphatic ester of methacrylic and/or acrylic acid which is not (a) or (b), or a mixture of such monomers,
   (d) from 0 to 30% by weight of a copolymerizable vinyl ester which is not (a), (b) or (c), or a mixture of such monomers,
   (e) from 0 to 85% by weight of an aromatic vinyl hydrocarbon which is not (a), (b), (c) or (d), or a mixture of such monomers, and
   (f) from 0 to 10% by weight, preferably from 0 to 8% by weight, of a further ethylenically unsaturated monomer which is not (a), (b), (c), (d) or (e), or a mixture of such monomers, the sum of the proportions by weight of monomers (a) to (f) being in each case 100% by weight,
   (B) at least one crosslinking agent being a di- and/or polyisocyanate,
   (C) at least one aromatic mono- and/or polycarboxylic acid and/or at least one anhydride of an aromatic mono-and/or polycarboxylic acid.

The invention furthermore relates to a process for the production of a protective and/or decorative coatings on a substrate surface, using these coating compositions, and to the use of these coating compositions for refinishing.

It is surprising and was not foreseeable that the coating compositions according to the invention, even on curing at low temperatures, cure rapidly while at the same time retaining long processibility (pot life). A particular advantage is the masking resistance of the resulting coatings, which is improved in comparison with that of conventional coating compositions and is of particular importance when the coating compositions are used in the area of the finishing of large-size vehicles.

An additional advantage is that the improvement of the masking resistance of the coatings can surprisingly be achieved without any impairment of the leveling, topcoat holdout and pot life. Finally, an additional advantage is that the resulting coatings possess good solvent resistance and surface hardness.

The individual components of the coating compositions according to the invention are now described in more detail.

Examples of binders containing hydroxyl groups which are employed as component (A) in addition to the claimed polyacrylate (A2) are hydroxy group-containing polyester resins, hydroxy group-containing alkyd resins.

Hydroxy group-containing polyester resins and hydroxy group-containing alkyd resins are well known and are obtainable by reacting
p1) polycarboxylic acids or their esterifiable derivatives, together if desired with monocarboxylic acids,
p2) polyols, together if desired with monools, and
p3) if desired, other modifying components.

Examples of polycarboxylic acids which can be employed as component (p1) are aromatic, aliphatic and cycloaliphatic polycarboxylic acids. It is preferred to employ aromatic and/or aliphatic polycarboxylic acids as component (p1).

Examples of suitable polycarboxylic acids are phthalic acid, isophthalic acid, terephthalic acid, halophthalic acids, such as tetrachloro- or tetrabromophthalic acid, adipic acid, glutaric acid, nonanedioic acid, sebacic acid, fumaric acid, maleic acid, trimellitic acid, pyromellitic acid, tetrahydrophthalic acid, hexahydrophthalic acid, 1,2-cyclohexanedicarboxylic acid, 1,3-cyclohexane dicarboxylic acid, 1,4-cyclohexane dicarboxylic acid, 4-methylhexahydrophthalic acid, endomethylenetetrahydrophthalic acid, tricyclodecane dicarboxylic acid, endoethylenehexahydrophthalic acid, camphoric acid, cyclohexanetetracarboxylic acid, cyclobutanetetracarboxylic acid etc. The cycloaliphatic polycarboxylic acids may be employed either in their cis or in their trans form or as a mixture of the two forms. Also suitable are the esterifiable derivatives of the abovementioned polycarboxylic acids, for example their single or multiple esters with aliphatic alcohols having 1 to 4 carbon atoms or hydroxy alcohols having 1 to 4 carbon atoms. In addition, it is also possible to employ the anhydrides of the abovementioned acids, where they exist.

If desired, monocarboxylic acids can also be employed together with the polycarboxylic acids, examples being benzoic acid, tert-butylbenzoic acid, lauric acid, isononanoic acid and fatty acids of naturally occurring oils. The monocarboxylic acid preferably employed is isononanoic acid.

Polyol components (p2) suitable for the preparation of the hydroxy group-containing polyester or alkyd resins are polyhydric alcohols such as ethylene glycol, propanediols, butanediols, hexanediols, neopentylglycol, diethylene glycol, cyclohexanediol, cyclohexanedimethanol, trimethylpentanediol, ethylbutylpropanediol, ditrimethylolpropane, trimethylolethane, trimethylolpropane, glycerol, pentaerythritol, dipentaerythritol, trishydroxyethyl isocyanurate, polyethylene glycol, and polypropylene glycol. Examples of suitable monools are butanol, octanol, lauryl alcohol, and ethoxylated and/or propoxylated phenols.

Suitable components (p3) for the preparation of the hydroxy group-containing polyester or alkyd resins are in particular compounds which contain a group which is reactive with respect to the functional groups of the polyester or alkyd resins. As the modifying component (p3) it is preferred to use polyisocyanates and/or diepoxide compounds, and also - if desired - monoisocyanates and/or monoepoxide compounds. Examples of suitable components (p3) are described in DE-A-40 24 204 on page 4, lines 4 to 9. As component (p3) compounds are also suitable which also contain, in addition to a group which is reactive with respect to functional groups of the polyester or alkyd resin, a tertiary amino group, for example monoisocyanates having at least one tertiary amino group or mercapto compounds having at least one tertiary amino group. For details reference is made to DE-A-40 24 204, page 4, lines 10 to 49.

The hydroxy group-containing polyester resins and the hydroxy group containg alkyd resins used as component (A) peferrably have an OH number of from 90 to 130, more preferably from 90 to 110, mg of KOH/g, an acid number of less than 12 mg of KOH/g, preferably from 1 to 8 mg of KOH/g, a number-average molecular weight of from 1300 to 3500, preferably from 1350 to 2000, and a polydispersity of from 5 to 50, preferably from 5 to 10. The polydispersity is in this context defined as the ratio of the weight-average molecular weight to the number-average molecular weight. The molecular weights are in each case determined by gel permeation chromatography against a polystyrene standard.

The hydroxy group-containing polyester resins and the hydroxy group-containing alkyd resins are prepared by the known methods of esterification (cf. various standard works, for example:
1. Temple C. Patton, Alkyd Resin Technology, Interscience Publishers John Wiley & Sons, New York, London 1962;
2. Dr. Johannes Scheiber, Chemie und Technologie der künstlichen Harze [Chemistry and Technology of Synthetic Resins], Wissenschaftliche Verlagsgesellschaft mbH, Stuttgart, 1943;
3. Hans Wagner + Hans-Friedrich Sarx, Lackkunstharze [Synthetic Resins for Coatings], 4th edition, Karl Hanser Verlag, Munich, 1959;
4. Ullmanns Encyklopädie der technischen Chemie [Ullmann's Encyclopedia of Industrial Chemistry], volume 14, pages 80 to 106 (1963)).

The reaction is conventionally carried out at temperatures of between 180 and 280°C, in the presence if desired of an appropriate esterification catalyst, for example lithium octanoate, dibutyltin oxide, dibutyltin dilaurate, para-toluenesulfonic acid and the like.

The preparation of the hydroxy group containing polyester resins and the hydroxy group-containing alkyd resins is conventionally carried out in the presence of small quantities of a suitable solvent as entraining agent. Examples of the entraining agents employed are aromatic hydrocarbons, in particular xylene and (cyclo)aliphatic hydrocarbons, for example cyclohexane.

Hydroxy group-containing polyacrylate resins are also well known. They may contain, in addition to the hydroxy groups, carboxy groups and/or amide groups and/or epoxy groups, preferably carboxy groups. The hydroxy group-containing polyacrylate resins used as component (A) preferably have an OH number in the range of from 20 to 360 mg KOH/g, more preferably of from 50 to 150 mg KOH/g, most preferably of from 70 to 105 mg of KOH/g and an acid number in the range of from 0 to 140 mg KOH/g, preferably of from 0 to 50 mgKOH/g, more preferably of from 0 to 12 mg of KOH/g and most preferably of from 0 to 4 mg of KOH/g. Preferably, there are employed hydroxy group-containing polyacrylate resins having a number average molecular weight of at most 10,000, whereby polyacrylate resins having a number average molecular weight of from 1,000 to 5,000, preferably of from 2000 to 4000 are particularly preferred. The number average molecular weight is determined by gel-permeation chromatography using polystyrene as the standard.

The hydroxy group-containing polyacrylate resins may be prepared in accordance with usual processes as for example solution polymerization in the presence of an initiator and, optionally, in the presence of a polymerization regulator. The polymerization is carried out at temperatures in the range of from 100 to 180 °C. Peroxide group-containing initiators, azo group-containing initiators, and thermolabile compounds as for example compounds on the basis of highly substituted ethane derivatives, are suitable as initiators.

For the preparation of the hydroxy group-containing polyacrylate resins, there may be employed all monomers which are usually employed for this purpose. Suitable hydroxy group-containing monomers are for example hydroxyalkyl esters of α,β-unsaturated carboxylic acids with compounds containing primary or secondary hydroxy groups. If a high reactivity of the acrylic copolymer is desired, there may be employed hydroxyalkyl esters having primary hydroxy groups exclusively. If the polyacrylate is intended to be less reactive, there may be used hydroxyalkyl esters having secondary hydroxy groups exclusively. Of course, there may also be employed mixtures of hydroxyalkyl esters having primary hydroxy groups and of hydroxyalkyl esters having secondary hydroxy groups.

Examples of suitable hydroxyalkyl esters of α,β-unsaturated carboxylic acids with compounds having primary hydroxy groups are hydroxyethyl acrylate, 3-hydroxy-n-propyl acrylate, 4-hydroxy-n-butyl acrylate, hydroxyamyl acrylate, hydroxyhexyl acrylate, and hydroxyoctyl acrylate as well as the corresponding methacrylates. As examples of suitable hydroxyalkyl esters having secondary hydroxy groups, there may be mentioned 2-hydroxybutyl acrylate, 3-hydroxy-n-butyl acrylate as well as the corresponding methacrylates. It goes without saying that the corresponding esters of other α,β-unsaturated carboxylic acids may also be employed, e. g. esters of crotonic acid or isocrotonic acid.

Preferably, the hydroxy group-containing monomer may at least partly be a reaction product of 1 mole hydroxyethyl acrylate and/or hydroxyethyl methacrylate and, on average, 2 moles of ε-caprolactone. As the hydroxy group-containing monomer, there may also be used, at least partly, a reaction product of acrylic acid and/or methacrylic acid with an equivalent amount of a glycidyl ester of a carboxylic acid having a tertiary α-carbon atom. Glycidyl esters of highly branched monocarboxylic acids (for example branched carboxylic acids having 11 to 13 carbon atoms (Versatic acid)) are commercially available under the trade name "Cardura". The reaction of said acrylic acid or methacrylic acid with said glycidyl ester of a carboxylic acid having a tertiary α-carbon atom may be carried out before, during or after the polymerization reaction.

Hydroxypentyl (meth)acrylates, hydroxyhexyl (meth)acrylates, and hydroxyoctyl (meth)acrylates also can be used as hydroxy group-containing monomers.

Furthermore, aliphatic and cycloaliphatic esters of ethylenically unsaturated carboxylic acids as for example aliphatic or cycloaliphatic esters of (meth)acrylic acid, crotonic acid, isocrotonic acid and maleic acid are suitable monomers for the preparation of the hydroxy group-containing polyacrylate resins. As examples of such monomers, there are mentioned methyl (meth)acrylate, ethyl (meth) acrylate, propyl (meth)acrylate, n-butyl (meth)acrylate, isobutyl (meth)acrylate, t-butyl (meth)acrylate, isopropyl (meth)acrylate, pentyl (meth)acrylate, n-hexyl (meth)acrylate, coclohexyl (meth)acrylate, isobornyl (meth)acrylate, t-butylcyclohexyl (meth)acrylate, isoamyl (meth)acrylate, hexyl (meth)acrylate, 2-ethylhexyl (meth)acrylate, furfuryl (meth)acrylate, octyl (meth)acrylate, 3,5,5-trimethylhexyl (meth)acrylate, decyl (meth)acrylate, lauryl (meth)acrylate, hexadecyl (meth) acrylate, octadecyl (meth)acrylate, stearyl (meth)acrylate, and ethyltriglycol (meth)acrylate .

In addition, vinylaromatic compounds are also suitable comonomers. Preferably, the vinylaromatic compound contains 8 to 9 carbon atoms per molecule. Styrene, vinyltoluenes, α-methyl styrene, chlorostyrenes, o-, m-and p-methylstyrene, 2,5-dimethylstyrene, p-methoxystyrene, p-t-butylstyrene, p-dimethylaminostyrene, p-acetamidostyrene and m-vinylphenol are examples of suitable comonomers. Preferably, vinyltoluenes as well as particularly styrene are employed.

Further suitable comonomers are alkoxyethyl acrylates, aryloxyethyl acrylates as well as the corresponding methacrylates as for example butoxyethyl (meth)acrylate and phenoxyethyl (meth)acrylate as well as (meth)acrylic acid, (meth)acrylamid, (meth)acrylonitril and alkyl esters of other ethylenically unsaturated carboxylic acids, e. g. alkyl esters of crotonic acid and isocrotonic acid as well as polymerizable vinyl ethers and vinyl esters such as vinyl esters of monocarboxylic acids , preferably vinyl esters of -branched monocarboxylic acids having 5 to 15 carbon atoms per molecule. The branched monocarboxylic acids can be obtained by reacting formic acid or carbon monoxide and water with olefins in the presence of a liquid, strongly acidic catalyst; the olefins may be products of the cracking of paraffinic hydrocarbons, such as mineral oil fractions, and may contain both branched and straight-chain acyclic and/or cycloaliphatic olefins. In the reaction of such olefins with formic acid or with carbon monoxide and water, a mixture is formed of carboxylic acids in which the carboxyl groups are located predominantly at a quaternary carbon atom. Examples of other olefinic starting materials are propylene trimer, propylene tetramer and diisobutylene. The vinyl esters may also be produced from the acids in a manner known per se, for example by reacting the acids with acetylene. Vinyl esters of saturated aliphatic monocarboxylic acids having 9-11 carbon atoms and branched at the carbon atom are ready available. Furthermore, particular preference is given to the vinyl ester of p-tertiary-butyl benzoic acid. Examples of other suitable vinyl esters are vinyl acetate and vinyl propionate.

Prefered polyacrylate resins are polyacrylate resins containing one or more monomers selected from the group consisting of 4-hydroxy-n-butyl acrylate, 4 hydroxy-n-butyl methacrylate, 3-hydroxy-n-butyl acrylate and 3-hydroxy-n-butyl methacrylate, together if desired with hydroxyethyl methacrylate.

The preparation of the polyacrylate resins which are employed in accordance with the invention can be carried out by polymerization methods which are generally well known. Polymerization methods for the preparation of polyacrylate resins are generally known and have been described in numerous references (cf. e.g.: Houben-Weyl, Methoden der organischen Chemie [Methods in Organic Chemistry], 4th edition, volume 14/1, pages 24 to 255 (1961)).

The hydroxy group-containing polyacrylate resins employed in accordance with the invention are preferably prepared using the solution polymerization method. In this method it is conventional to take an organic solvent or solvent mixture and to heat the mixture to boiling. The monomer mixture to be polymerized and one or more polymerization initiators are then added continuously to the organic solvent or solvent mixture. Polymerization takes place at temperatures of between 100 and 160°C, preferably between 130 and 150°C.

The polymerization is preferably carried out in a high-boiling organic solvent which is inert with respect to the monomer employed. Examples of suitable solvents are relatively highly substituted aromatics, for example Solvent Naphtha, heavy benzene, various Solvesso grades, various Shellsol grades and Deasol and relatively high-boiling aliphatic and cycloaliphatic hydrocarbons, for example various white spirits, mineral terpentine oil, tetralin and decalin and various esters, for example ethylglycol acetate, butylglycol acetate, ethyldiglycol acetate and the like.

The polymerization initiators preferably employed are initiators which form free radicals. The nature and quantity of initiator are usually selected such that, at the temperature of polymerization, the supply of free radicals is substantially constant during the feed phase.

Cited examples of initiators which can be employed are di-tert-butyl peroxide, tert-butyl hydroperoxide, tert-butyl peroxybenzoate, tert-butyl peroxypivalate, tert-butyl peroxy-3,5,5trimethylhexanoate, tert-butyl peroxy-2-ethylhexanoate, dicumyl peroxide, cumyl hydroperoxide, tert-amyl peroxybenzoate, tert-amyl peroxy-2-ethylhexanoate, diacyl peroxides, for example diacetyl peroxide, peroxyketals, 2,2-di(tert-amylperoxy-)propane, ethyl 3,3-di(tert-amylperoxy-)butyrate and thermally labile highly substituted ethane derivatives, based for example on silyl-substituted ethane derivatives and on benzopinacol. Furthermore, it is also possible to employ aliphatic azo compounds, for example azoisovaleronitrile and azobiscyclohexanenitrile.

The quantity of initiator is in most cases from 0.1 to 8% by weight, based on the quantity of monomer to be processed, although it can be even higher if desired. The initiator, dissolved in a portion of the solvent employed for the polymerization, is metered in gradually during the polymerization reaction. The initiator feed preferably takes from about 0.5 to 2 hours longer than the monomer feed, so as to achieve a good action during the after-polymerization phase as well. In another preferred preparation variant the feed of initiator is commenced about 15 minutes before the addition of the monomers, so as to ensure a good supply of free radicals at the beginning of the polymerization. If initiators are employed which only have a low rate of decomposition under the prevailing reaction conditions, then it is also possible to include the initiator in the initial charge.

The polymerization conditions (reaction temperature, feed time of the monomer mixture, nature and quantity of the organic solvents and polymerization initiators, possible use of molecular weight regulators, for example mercaptans, thioglycolic esters and chlorine-containing hydrogen compounds) are selected such that the polyacrylate resins employed in accordance with the invention have the desired molecular weight.

The acid number of the polyacrylate resins employed in accordance with the invention can be adjusted by the person skilled in the art via the use of appropriate quantities of monomers which contain carboxyl groups (for example acrylic or methacrylic acid). Similar comments apply to the adjustment of the hydroxyl number. It can be controlled via the quantity of hydroxyl group-containing monomers which are employed.

The coating compositions according to the present invention most preferably contain as component (A) a binder comprising
(A1) from 20 to 60% by weight, preferably from 30 to 50% by weight, of at least one hydroxy group-containing polyester or alkyd resin, and
(A2) from 40 to 80% by weight, preferably from 50 to 70% by weight, of at least one polyacrylate resin which has been prepared at least partially in the presence of component (A1).

The binder composed of (A1) and (A2) preferably has a hydroxyl number of from 80 to 150, particularly preferably from 85 to 105, mg of KOH/g and an acid number of from 0.1 to 12, preferably from 4 to 8 mg of KOH/g.

As component (A1) the above described hydroxy group-containing polyester or alkyd resins can be employed and as component (A2) the above described hydroxy group containing polyacrylate resins is employed. Also suitable as component (A2) are polyacrylate resins with an OH number in the range of from 0 to 20 mg KOH/g.

It is essential that the polyacrylate resin (A2) is prepared at least partially in the presence of the hydroxy group-containing polyester or alkyd resin (A1). The initiators employed are preferably those containing tert-butyl groups, for example di-tert-butyl peroxide, tert-butyl hydroperoxide, 2,2-di-tert-butylperoxybutane and 1,3-bis(tert-butylperoxyisopropyl)benzene, since they promote grafting of the polyacrylate resin onto the polyester or alkyd resin.

The possible residual quantity of component (A2) is added to the binder solution or to the coating composition subsequently. In this context it is possible for this added resin to have the same monomer composition as the addition polymer resin built up in the presence of the condensation polymer resin. However, it is also possible to add an addition polymer resin having a different monomer composition. Furthermore, it is possible to add a mixture of different addition polymer resins.

The coating compositions according to the invention contain as component (B) at least one crosslinking agent. Examples of crosslinking agents which can be employed as component (B) are polyisocyanates, aminoplast resins and/or polyepoxides. It is prefered to employ polyisocyanates and mixtures of polyisocyanates and aminoplast resins as crosslinking agent (B). Very particular preference is given to employing at least one polyisocyanate as crosslinking agent (B).

As crosslinking agent (B) any organic polyisocyanate is suitable which contains free isocyanate groups which are attached to aliphatic, cycloaliphatic, araliphatic and/or aromatic structures. The polyisocyanates preferably employed are those containing 2 to 5 isocyanate groups per molecule. It is possible if desired to add to the polyisocyanates small quantities of organic solvent, preferably from 1 to 25% by weight, based on pure polyisocyanate, so as to improve the ease of incorporation of the polyisocyanate. Examples of solvents which are suitable as additives for the polyisocyanates are ethoxyethyl propionate, butyl acetate and the like.

Examples of suitable polyisocyanates are described in, for example, "Methoden der organischen Chemie" [Methods in Organic Chemistry], Houben-Weyl, volume 14/2, 4th edition, Georg Thieme Verlag, Stuttgart 1963, page 61 to 70, and by W. Siefken, Liebigs Ann. Chem. 562, 75 to 136.

Suitable examples are 1,2-ethylene diisocyanate, 1,4-tetramethylene diisocyanate, 1,6-hexamethylene diisocyanate, 2,2,4- or 2,4,4-trimethyl-1,6-hexamethylene diisocyanate, 1,12-dodecane diisocyanate, ,'-diisocyanato-dipropyl ether, cyclobutane 1,3-diisocyanate, cyclohexane 1,3- and 1,4-diiso-cyanate, 2,4- and 2,6-diisocyanato-1-methyl-cyclo-hexane, 3-isocyanatomethyl-3,5,5-trimethyl-cyclo-hexyl isocyanate ("isophorone diisocyanate"), 2,5- and 3,5-bis(isocyanatomethyl)-8-methyl-1,4-methano-decahydro-naphthalene, 1,5-, 2,5-, 1,6- and 2,6-bis(isocyanatomethyl)-4,7-methanohexahydroindane, 1,5-, 2,5-, 1,6- and 2,6-bis(isocyanato)-4,7-methanohexahydroindane, dicyclo-hexyl 2,4'- and 4,4'-diisocyanate, 2,4- and 2,6-hexahydrotolylene diisocyanate, perhydro-2,4'- and -4,4'-diphenylmethane diisocyanate, ,'-diisocyanato-1,4-diethylbenzene, 1,3- and 1,4-phenylene diisocyanate, 4,4'-diiso-cyanatobiphenyl, 4,4'-diisocyanato-3,3'-dichloro-biphenyl, 4,4'-diisocyanato-3,3'-dimethoxybiphenyl, 4,4'- diisocyanato-3,3'-dimethylbiphenyl, 4,4'-diiso-cyanato-3,3'-diphenylbiphenyl, 2,4'- and 4,4'-diisocyanatodiphenylmethane, naphthylene 1,5-diisocyanate, tolylene diisocyanates, such as 2,4- or 2,6-tolylene diisocyanate, N,N'-(4,4'-dimethyl-3,3'-diisocyanato-diphenyl)uretdione, m-xylylene diisocyanate, dicyclo-hexylmethane diisocyanate, tetramethylxylylene diiso-cyanate, and also triisocyanates, such as 2,4,4'-triisocyanatodiphenyl ether, and 4,4',4''-tri-isocyanatotriphenylmethane. The polyisocyanates preferably employed, in combination if desired with the abovementioned polyisocyanates, are those containing isocyanurate groups and/or biuret groups and/or allophanate groups and/or urethane groups and/or urea groups. Polyisocyanates containing urethane groups are obtained, for example, by reacting some of the isocyanate groups with polyols such as polyalkylene glycols, alkyd resins, neopentyl glycol, hexane triol, trimethylolpropane and glycerol.

It is preferred to employ aliphatic or cycloaliphatic polyisocyanates, especially hexamethylene diisocyanate, dimerized and trimerized hexamethylene diisocyanate, isophorone diisocyanate, dicyclohexylmethane 2,4'-diisocyanate or dicyclohexylmethane 4,4'-diisocyanate, or mixtures of these polyisocyanates. Very particular preference is given to employing mixtures of polyisocyanates which contain uretdione and/or isocyanurate groups and/or allophanate groups and which are based on hexamethylene diisocyanate, as are formed by the catalytic oligomerization of hexamethylene diisocyanate using appropriate catalysts. Otherwise, any desired mixtures of the polyisocyanates mentioned by way of example can be employed as component (B).

However, there may also be used capped polyisocyanates for example the above-described polyisocyanates which are reacted with the usual capping agents, e. g. with phenols, alcohols, esters of acetoacetic acid, ketoxims and ε-caprolactam. These compositions are stable at room temperature and generally cure at temperatures only in excess of 100 °C. In particular cases, e. g. when used with acetoacetic acid esters for capping, a crosslinking may already occur below 100 °C.

The quantity of the crosslinking agent employed is selected such that the ratio of the isocyanate groups of the crosslinking agent (B) to the hydroxyl groups of the binder component (A) is in the range from 1:3 to 3:1.

If the binder (A) contain carboxy groups as the functional groups, there may additionally be used as crosslinking agents polyepoxide compounds having at least 2 epoxy groups per molecule. Since resulting in a low preference for yellowing, there are particularly used aliphatic and/or alicyclic polyepoxides. The polyepoxide is usually employed in such an amount that the ratio of free carboxy groups of the binder (A) to the epoxy groups of the polyepoxide is in a range of from 1 : 3 to 3 : 1.

Examples for the polyepoxides suitable as crosslinking agents are cycloaliphatic bisepoxides, epoxidized polybutadienes originating from a reaction of commercially available polybutadiene oils with peracids or mixtures of organic acids and H₂O₂, respectively, products of the epoxidation of fats, oils, fatty acid derivatives and modified oils found in nature, epoxy group-containing novolaks, glycidyl ethers of polyhydric alcohols, e. g. ethylene glycol diglycidyl ether, glycerol polyglycidyl ether, sorbitol polyglycidyl ether, trimethylol propane polyglycidyl ether, and pentaerythritol polyglycidyl ether, as well as suitable polyacrylate resins having side-chain oxirane groups. Furthermore, there may be employed as crosslinking agents reaction products of hydroxy group-containing polyepoxides with di- or polyisocyanates, for example the compounds obtained by a reaction of OH-functional epoxides (e. g. sorbitol polyglycidyl ethers) with isophorone diisocyanate.

Polar polyepoxides are also suitable as crosslinking agents, for example compounds on the basis of a reaction product of melamine resins with acrylamide, with subsequent epoxidation of the acrylic double bond. This class of substances is exemplified by the commercially available products "Santolink LSE 114" and "Santolink LSE 120" of Monsanto Company. In this product, the epoxide resin backbone is a binuclear melamine wherein the number average molecular weight is about 1,200 to 2,000 and the epoxide equivalent weight is about 300 to 350.

The coating compositions according to the invention usually contain from 15 to 50%, preferably 20 to 40% by weight of the component (A) and from 6 to 50%, preferably from 6 to 20% by weight of the crosslinking agent (B), based in each case on the overall weight of the coating composition.

The coating compositions according to the invention contain as component (C) at least one aromatic mono-and/or polycarboxylic acid and/or at least one anhydride of an aromatic mono- and/or polycarboxylic acid. Component (C) is usually added to the binder component (A). Component (C) preferably is added to the binder component (A) after its preparation. Component (C) also can be added to the finished coating composition, i.e. after the addition of pigments, fillers, auxiliaries and crosslinking agents. Preferably, however, component (C) is added to the binder component (A) and dispersed to give a maximum degree of homogeneity.

Examples of aromatic mono- and polycarboxylic acids and anhydrides of aromatic mono- and polycarboxylic acids suitable as component (C) are phthalic anhydride, alkyl-and/or alkoxy-substituted phtalic anhydride, half-esters of phtalic anhydride, half esters of alkyl- and/or alkoxy-substituted phtalic anhydride, benzoic acid, alkyl- and/or alkoxy-substituted benzoic acid and mixtures of such aromatic mono- and polycarboxylic acids and anhydrides of aromatic mono- and polycarboxylic acids. It is particularly preferred to add benzoic acid as component(C).

The amount of component (C) is preferably from 0.1 to 2% by weight, more preferably from 0.1 to 1% by weight, most preferably from 0.4 to 0.9% by weight, related to the weight of the hydroxyl group-containing binder component (A), calculated as solid resin, i.e. without the solvent fraction.

The acid is added preferably at a temperature of from 20 to 120°C, particularly preferably at a temperature of from 40 to 100°C.

The anhydride is added preferably at a temperature of from 100 to 180°C, particularly preferably at a temperature of from 130 to 170°C.

The coating compositions according to the invention also contain one or more organic solvents. These solvents are usually employed in quantities of from 20 to 70% by weight, preferably from 30 to 60% by weight, based in each case on the overall weight of the coating composition.

Examples of suitable solvents are relatively highly substituted aromatic compounds, for example solvent naphtha, heavy benzene, various Solvesso grades, various Shellsol grades and Deasol, and relatively high-boiling aliphatic and cycloaliphatic hydrocarbons, for example various white spirits, mineral terpentine oil, tetralin and decalin, and various esters, for example ethylglycol acetate, butylglycol acetate, ethyldiglycol acetate and the like.

The coating compositions according to the invention may furthermore contain conventional auxiliaries and additives in conventional quantities, preferably from 0.01 to 10% by weight based on the overall weight of the coating composition. Examples of appropriate auxiliaries and additives are leveling agents such as silicone oils, plasticizers such as phosphoric esters and phthalic esters, viscosity-controlling additives, flatting agents, UV absorbers, light stabilizers, texturing agents and, if desired, fillers.

Furthermore the coating compositions according to the present invention can contain reactive diluents such as polyaldimines, for example the reaction product of isobutyraldehyde and isophoronediamine, and/or secondary amines.

The coating compositions according to the invention may also contain conventional pigments in conventional quantities, preferably from 0 to 40% by weight based on the overall weight of the coating composition. Examples of suitable pigments are organic, inorganic, metallic and other effect pigments.

The coating compositions are prepared in a known manner, by mixing and - if desired - dispersing the individual components.

These coating compositions may be applied to a substrate, by spraying, flow coating, dipping, rolling, knife coating or brushing, in the form of a film, the film subsequently being cured to give a firmly adhering coating.

The curing of these coating compositions is carried out conventionally at room temperature or at slightly elevated temperature, preferably at slightly elevated temperature, advantageously at temperatures below 120°C and preferably at temperatures of between 80°C and 60°C. The coating compositions can, however, also be cured under baking conditions, i.e. at temperatures of at least 120°C.

Particularly suitable substrates are metals and also wood, plastic, glass and the like.

Because of the short curing times and low curing temperatures, the coating compositions according to the invention are preferably employed for automotive refinishing, and for the finishing of large-size vehicles and goods-vehicle bodies. However, depending on the crosslinking agent employed, they may also be used for the production-line finishing of motor vehicles. Furthermore, they are particularly suitable as solid-color topcoat. However, they can of course also be employed as primer, basecoat and clearcoat, in particular over a metallic basecoat or a solid-color basecoat.

The present invention also relates to a process for the production of a protective and/or decorative coating on a substrate surface, which process is characterized in that a coating composition according to the invention is applied.

The-invention is now illustrated in more detail with reference to exemplary embodiments. All parts and percentages in these examples are by weight, unless expressly stated otherwise.

### Example I

A pigmented coating composition was prepared from 169.3 parts of a black pigment dispersion (1.6% carbon black pigment dispersed in 53.8% acrylic copolymer of 24% methyl methacrylate, 20% styrene, 27.5% hydroxyethyl methacrylate, 17.6% isodecyl methacrylate and 10.9% n-butyl acrylate (number average molecular weight below 2500; weight average molecular weight below 6500) with 2.1% dispersion aid additives in 42.5% solvents common to the art), 82,8 parts of a polyisocyanate blend (31% of the isocyanurate of hexamethylenediisocyanate and 10.4% of the isocyanurate of isophorone diisocyanate in 58.6% solvents common to the art), 72.6 parts of a reducer blend (4.1% UV absorber, dibutyltin dilaurate and slip and mar additives in 95.9% solvents common to the art) and 0.8 parts of benzoic acid. This coating composition exhibited a very fast dry time.

### Example II

An unpigmented (clear) coating composition containing an acrylic copolymer of 14.2% styrene, 18.7% n-butyl methacrylate, 33.1% methyl methacrylate, 33.8% hydroxpropyl methacrylate, and 0.3% methacrylic acid (number average molecular weight less than 10,000), trimerized hexamethylenediisocyanate and 0.25% of benzoic acid exhibited improved pot life.

### III.1. Preparation of a polyester resin A1:

796 parts of trimethylolpropane, 540 parts of isononanoic acid, 821 parts of phthalic anhydride and 83 parts of xylene are placed in a 4 liter condensation polymerization vessel fitted with stirrer, steam-heated column and water separator and are heated slowly. Condensation is carried out at a temperature of max. 190°C up to an acid number of 5 mg of KOH/g and a viscosity of 8.0 dPas (60% in xylene). The batch is then cooled, diluted at 130°C with 910 parts of Shellsol A, and cooled further to room temperature.
The resulting polyester has a solids content of 66.5%, ar acid number of 5 mg of KOH/g, a (theoretical) OH number of 97.2 mg of KOH/g and a viscosity of 70 dPas (original). The number-average molecular weight Mn is 1493, the weight-average molecular weight Mw is 13,243 and the polydispersity Mw/Mn is 8.87 (each determined by gel permeation chromatography against a polystyrene standard).

### III.2. Preparation of a polyester resin A2:

796 parts of trimethylolpropane, 540 parts of isononanoic acid, 821 parts of phthalic anhydride and 83 parts of xylene are placed in a 4 liter condensation polymerization vessel fitted with stirrer, steam-heated column and water separator and are heated slowly. Condensation is carried out at a temperature of max. 190°C up to an acid number of 10 mg of KOH/g and a viscosity of 7.2 dPas (60% in xylene). The batch is then cooled, diluted at 130°C with 910 parts of Shellsol A, and cooled further to room temperature.

The resulting polyester has a solids content of 65.4%, an acid number of 8.9 mg of KOH/g, a (theoretical) OH number of 101 mg of KOH/g and a viscosity of 50 dPas (original). The number-average molecular weight Mn is 1350, the weight-average molecular weight Mw is 7830 and the polydispersity Mw/Mn is 5.8 (each determined by gel permeation chromatography against a polystyrene standard).

### III.3. Preparation of a polyester resin A3:

796 parts of trimethylolpropane, 540 parts of isononanoic acid, 821 parts of phthalic anhydride and 83 parts of xylene are placed in a 4 liter condensation polymerization vessel fitted with stirrer, steam-heated column and water separator and are heated slowly. Condensation is carried out at a temperature of max. 190°C up to an acid number of 15 mg of KOH/g and a viscosity of 5.3 dPas (60% in xylene). The batch is then cooled, diluted at 130°C with 910 parts of Shellsol A, and cooled further to room temperature.

The resulting polyester has a solids content of 66.5%, an acid number of 13 mg of KOH/g, a (theoretical) OH number of 104 mg of KOH/g and a viscosity of 22 dPas (original). The number-average molecular weight Mn is 1241, the weight-average molecular weight Mw is 5843 and the polydispersity Mw/Mn is 4.71 (each determined by gel permeation chromatography against a polystyrene standard).

### III.4. Preparation of a polyester resin A4:

848 parts of trimethylolpropane, 444 parts of isononanoic acid, 876 parts of phthalic anhydride and 83 parts of xylene are placed in a 4 liter condensation polymerization vessel fitted with stirrer, steam-heated column and water separator and are heated slowly. Condensation is carried out at a temperature of max. 190°C up to an acid number of 18 mg of KOH/g and a viscosity of 80 dPas (60% in xylene). The batch is then cooled, diluted at 130°C with 1200 parts of Shellsol A, and cooled further to room temperature.

The resulting polyester has a solids content of 66.5%, an acid number of 16 mg of KOH/g, a theoretical OH number of 114 mg of KOH/g and a viscosity of >90 dPas (original). Because of the high viscosity of the resulting polyester, no further reactions were carried out.

### IV.1. Preparation of the hydroxyl group-containing acrylate resins E1 to E5 and C1 to C6

The preparation of the acrylate copolymers was in each case carried out in a 4 liter stainless steel polymerization vessel fitted with stirrer, reflux condenser, a monomer feed and an initiator feed. The components, specified in each case in Table 1, are weighed in and then the initial charge is heated to 165°C. All of the additions are commenced at the same time; the monomer feed is metered in at a uniform rate over the course of 4 h, and the initiator feed is metered in at a uniform rate over the course of 5 h. During the polymerization the temperature in the vessel is held at 160-165°C.

After this, polymerization is continued for a further 2 h. The resulting acrylate resin solution has a solids content of 80%. The temperature is then lowered to 120°C and the acrylate resin is diluted with butyl acetate to a solids content of 65%, and the quantity of benzoic acid indicated in Table 1, or the quantity of tert-butyl benzoic acid or hydroxystearic acid indicated in Table 1, is added.

The polyester resin A1 or A2 or A3 and the commercially available vinyl ester of Versatic acid (commercial product VeoVa 10 from Shell Chemie), in each case in the quantities specified in Table 1, are weighed into the initial charge.

The quantities of styrene, OH monomer and methyl methacrylate indicated in each case in Table 1 are weighed into the monomer feed.

14 parts of di-tert-butyl peroxide, 44 parts of Shellsol A (commercially available aromatic solvent mixture having a boiling range of 165 to 185°C) and
25 parts of xylene
are weighed into the initiator feed. This composition of the initiator feed is employed in the preparation of all of the acrylate resins.

### IV.2. Preparation of the hydroxyl group-containing acrylate resin E6

The preparation of the acrylate copolymer according to the invention was carried out in each case in a 4 liter stainless steel polymerization vessel fitted with stirrer, reflux condenser, a monomer feed and an initiator feed. The components, indicated in Table 1, of the initial charge, of the monomer feed and of the initiator feed are weighed in, and the initial charge is then heated to 165°C.

The additions are all commenced at the same time; the monomer feed is metered in uniformly over the course of 4 h, and the initiator feed is metered in uniformly over the course of 5 h. During the polymerization the temperature in the vessel is held at 160-165°C. After this, polymerization is continued for a further 2 h. The resulting acrylate resin solution has a solids content of 80%. 7.5 parts of phthalic anhydride are added at 165°C, and the temperature is held at 165°C for about a further 2 hours. The temperature is then lowered to 120°C and the acrylate resin is diluted with butyl acetate to a solids content of 65%.
The polyacrylate resin obtained in this way has a solids content of 64.4%, an acid number of 4.4 mg of KOH/g, a viscosity of 3.0 dPas (55% in butyl acetate) and a hydroxyl number of about 90.

### IV.3. Preparation of the hydroxyl group-containing acrylate resin C7

The preparation of the hydroxyl group-containing acrylate resin C7 was carried out analogously to the preparation of the acrylate resin E6, but adding 7.8 parts of hexahydrophthalic anhydride instead of phthalic anhydride.

### IV.4. preparation of the hydroxyl group-containing acrylate resin C 8

The preparation of the hydroxyl group-containing acrylate resin C 8 is carried out analogously to the preparation of the acrylate resin C 1, the acrylic acid likewise being weighed into the monomer feed and added with the other monomers.

### IV.5. Preparation of the hydroxyl group-containing acrylate resin C9

177 parts of Shellsol A and 113 parts of VeoVa 10 are weighed into the initial charge.
565 parts of styrene
250 parts of hydroxy-n-butyl acrylate and
201 parts of methyl methacrylate are weighed into the monomer feed.
22.6 parts of di-tert-butyl peroxide,
71 parts of Shellsol A (commercially available aromatic solvent mixture having a boiling range of 165 to 185°C) and
40 parts of xylene
are weighed into the initiator feed.

The polymerization is carried out analogously to the preparation of the polyacrylate resin C1, by heating the initial charge at 165°C. All of the additions are commenced at the same time; the monomer feed is metered in uniformly over the course of 4 h, and the initiator feed is metered in uniformly over the course of 5 h. During the polymerization the temperature in the vessel is held at 160-165°C. After this, polymerization is continued for a further 2 h. The resulting acrylate resin solution has a solids content of 80%. The temperature is then lowered to 120°C and the acrylate resin is diluted with butyl acetate to a solids content of 65%. 3.94 parts of benzoic acid are then added. After this, 1133 parts of polyester resin A1 are added to the polyacrylate resin solution.

The polyacrylate resin/polyester mixture obtained in this way has a solids content of 64.5%, an acid number of 4.0 mg of KOH/g, a viscosity of 7.2 dPas (55% in butyl acetate) and a hydroxyl number of about 90. Because of the high viscosity of the polyacrylate resin/polyester mixture, no coating composition was prepared using this mixture.

### V. Preparation of the coating compositions E1 to E6 and C1 to C8 (Comparative Examples)

### V.1. Preparation of the curing agent solution

The curing agent solutions are prepared by mixing the components specified below:

| | |
|---|---|
| 4 | parts of catalyst solution¹) |
| 50.6 | parts of Desmodur N 3390²⁾ |
| 10.0 | parts of Solvent naphtha |
| 7.5 | parts of xylene |
| 1.5 | parts of n-butyl acetate 98/100 |
| 0.6 | part of Baysilon coating additive OL44³) |
| 14.0 | parts of 1-methoxypropyl 2-acetate |
| 11.0 | parts of butylglycol acetate |

| | |
|---|---|
| 1) the catalyst solution described in section III.3. | |
| 2) commercially available polyisocyanate from Bayer AG, a 90% strength solution in butyl acetate/solvent naphtha, 1:1, of a trimer based on hexamethylene diisocyanate and having a number-average molecular weight of about 700, an average functionality of between 3 and 4 and a content of uretdione groups of not more than 5%; | |
| 3) commercially available leveling agent based on a polyether-modified methylpolysiloxane from Bayer AG | |

### V.2. Preparation of an adjustment additive

An adjustment additive is prepared by mixing the components specified below:

| | |
|---|---|
| Xylene | 15.0 parts |
| Solvent naphtha | 13.0 parts |
| Petroleum spirit 135/180 | 10.0 parts |
| Butylglycol acetate | 3.0 parts |
| n-Butyl acetate 98/100 | 50.0 parts |
| 1-Methoxypropyl 2-acetate | 5.0 parts |
| Butoxyl | 2.0 parts |
| Dipentenes | 2.0 parts |

### V.3. Preparation of a catalyst solution

1.0 part of dibutyltin dilaurate is mixed with 50 parts of butyl acetate 98/100 and 49 parts of xylene.

### V.4. Preparation of topcoats E1 to E6 and C1 to C8

The topcoats are prepared by adding 5.5 parts of a commercially available organic red pigment (commercial product Novopermrot F2RK 70 from Hoechst) to 38.8 parts of the respective acrylate resin solution together with 3.2 parts of butyl acetate 98/100. The batch is first placed in a dissolver at 2000 revolutions/min for 10 min and then, with cooling, is ground to a Hegmann particle fineness of < 10 m. After this a mixture of 3.4 parts of butyl acetate 98/100, 20 parts of a commercially available acrylate resin containing hydroxyl groups and having an OH number of 150 mg of KOH/g (commercial product Macrynal SM 510 N from Hoechst AG), 0.5 parts of a commercially available light stabilizer based on a sterically hindered amine (commercial product Tinuvin 292 from Ciba Geigy), 0.2 part of the catalyst solution described above and 28.4 parts of the respective acrylate resin solution is added, and the mixture is homogenized using a stirrer (1000 revolutions/min).
In order to prepare the topcoats, in each case 4 parts by volume of the resulting mixture are mixed with 1 part by volume of the curing agent solution described above and 1 part by volume of the adjustment additive described above.

### V.5. Application of the topcoats

The resulting topcoat is then applied to phosphatized steel panels which have been treated with filler. The phosphatized steel panels are for this purpose coated with a commercially available, conventional filler (commercial product Glasurit Grundfüller [primer surfacer] 283-1874 from Glasurit GmbH, Münster) based on a binder containing epoxide groups and on an aminofunctional curing agent, and are subjected to intermediate drying at room temperature for 1 h. Then the topcoat is applied in 2 spray passes, with a flash-off time of 15 min in between, and dried at 20°C for 16 h. The dry film thickness is from 50 to 60 m.

The panels coated in this way are then subjected to various tests. The test results are shown in Table 3.

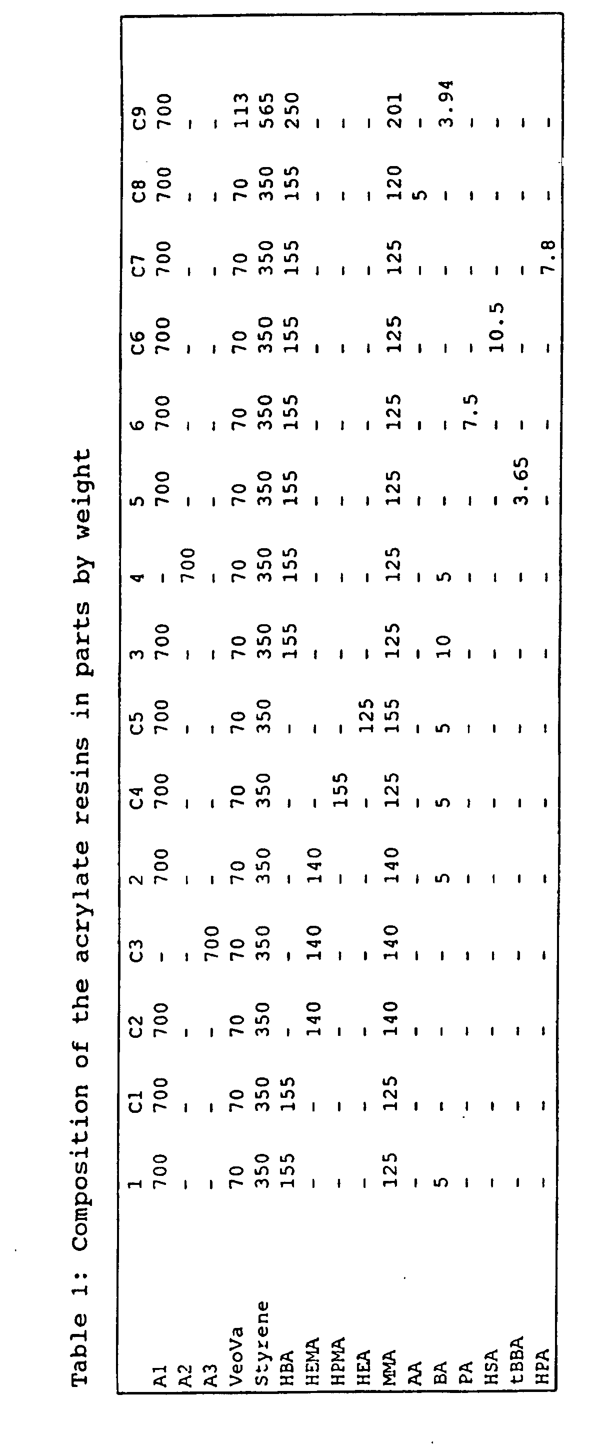

In this table and the following tables example 2 is a comparative example where as Example C9 is not a comparative example.

### Explanations for Table 1

A1, A2, A3, = polyester resin A1, A2 and A3 respectively
VeoVa = commercially available mixture of vinyl esters of saturated aliphatic monocarboxylic acids having predominantly 10 carbon atoms and being branched at the carbon atom
HBA = 4-hydroxy-n-butyl methacrylate
HEMA = hydroxyethyl methacrylate
HPMA = hydroxypropyl methacrylate
HEA = hydroxyethyl acrylate
MMA = methyl methacrylate
AA = acrylic acid
BA = benzoic acid
PA = phthalic anhydride
HSA = hydroxystearic acid
HPA = hexahydrophthalic anhydride
tBBA = t-butylbenzoic acid

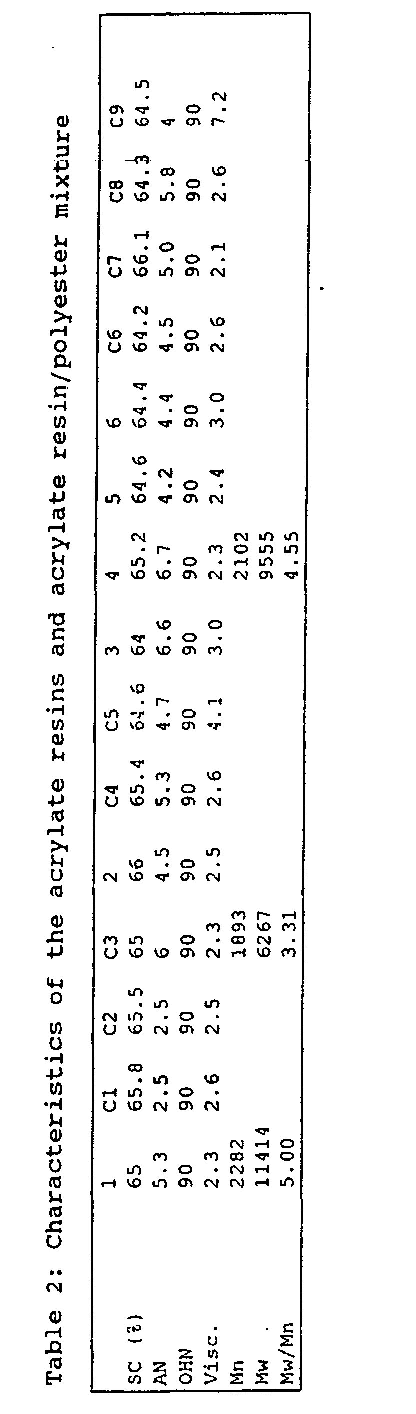

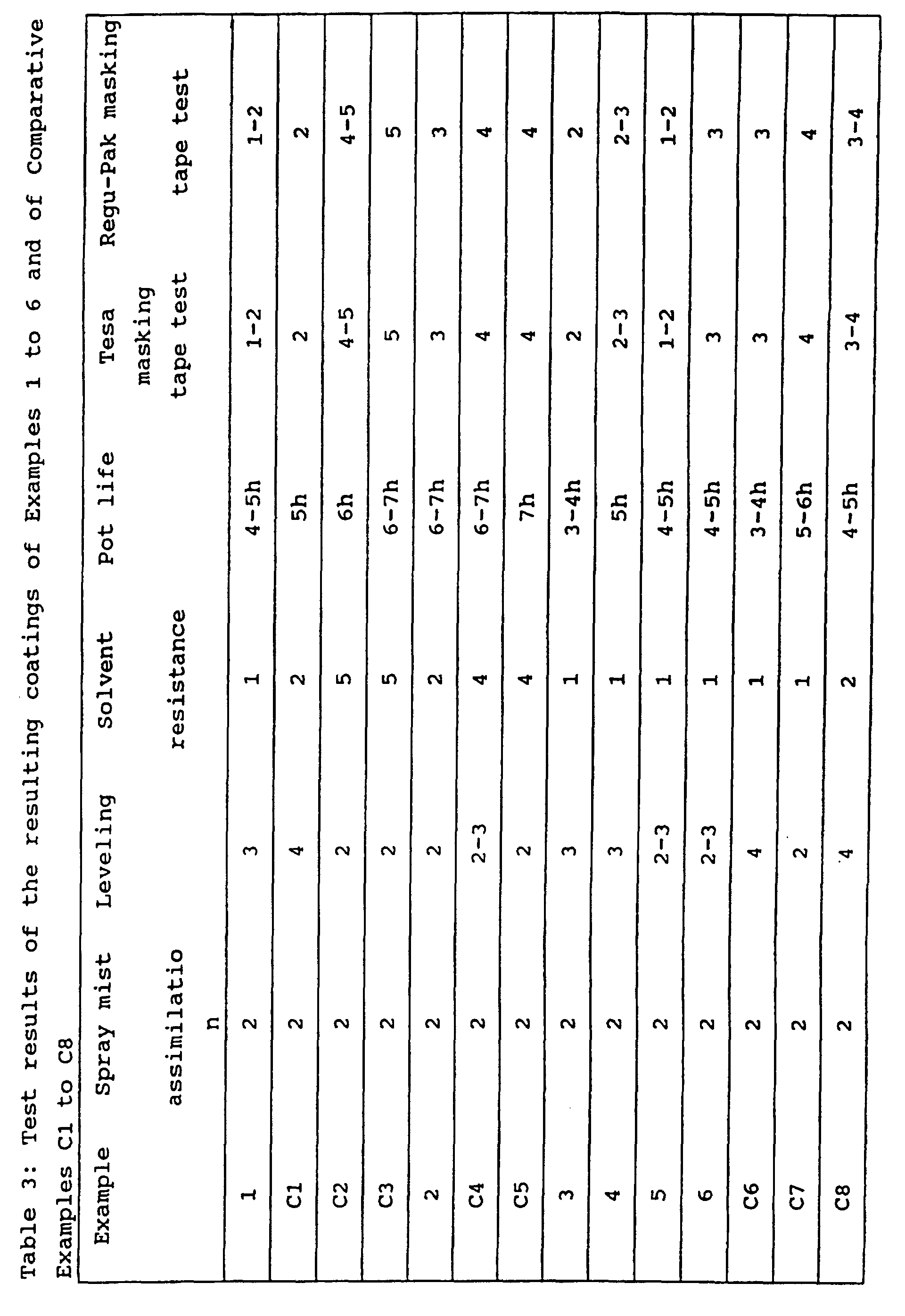

### Summary of the test results:

The spray mist assimilation is equally good across all the examples. A rating of > 3 or above for the leveling is no longer acceptable in practice, so that the coating compositions of Comparative Examples C1, C6 and C8 exhibit unacceptable results.

The solvent resistance of the resulting coatings is only acceptable at a rating of 2 or better. Coatings with a rating > 2 exhibit dulling phenomena and are no longer acceptable. Therefore the coatings of Comparative Examples C2, C3, C4 and C5 are not suitable with respect to solvent resistance. All the coating compositions show an adequate pot life of at least 3-4h.

For the most important criterion of the coatings, the masking tape test, the rating for acceptable coatings must be at least 2-3 or better. Therefore, the coatings of Comparative Examples C2, C3, C4, C5 and C8 exhibit a masking resistance which is completely inadequate. The best masking resistance is shown by the coating of Example 1.

## Claims

1. Coating compositions comprising as a component (A)
(A1)at least one hydroxy group containing polyester or alkyd resin and
(A2)at least one binder containing hydroxyl groups being a polyacrylate resin obtainable by polymerizing
(a) from 5 to 50% by weight of one or more monomers selected from the group consisting of 4-hydroxy-n-butyl acrylate, 4-hydroxy-n-butyl methacrylate, 3-hydroxy-n-butyl acrylate, and/or 3-hydroxy-n-butyl methacrylate,
(b) from 0 to 50% by weight of an ethylenically unsaturated, copolymerizable monomer which is not (a) and contains hydroxyl groups, or a mixture of such monomers,
(c) from 5 to 95% by weight of an aliphatic and/or cycloaliphatic ester of methacrylic and/or acrylic acid which is not (a) or (b), or a mixture of such monomers,
(d) from 0 to 30% by weight of a copolymerizable vinyl ester which is not (a), (b) or (c), or a mixture of such monomers,
(e) from 0 to 85% by weight of an aromatic vinyl hydrocarbon which is not (a), (b), (c) or (d), or a mixture of such monomers, and
(f) from 0 to 10% by weight, preferably from 0 to 8% by weight, of a further ethylenically unsaturated monomer which is not (a), (b), (c), (d) or (e), or a mixture of such monomers,
the sum of the proportions by weight of monomers (a) to (f) being in each case 100% by weight,
(B) at least one crosslinking agent being a di- and/or polyisocyanate,
(C) at least one aromatic mono- and/or polycarboxylic acid and/or at least one anhydride of an aromatic mono-and/or polycarboxylic acid.

2. Coating compositions according to claim 1 **characterized in that** it comprises
from 20 to 60% by weight of the hydroxy group-containing polyester or alkyd resin (A1) and
from 40 to 80% by weight of the polyacrylate resin (A2) which has been prepared, at least partially, in the presence of component (A1).

3. Coating compositions according to one of claims 1 or 2, **characterized in that** the amount of component (C) is 0.1 to 2% by weight, based on the weight of component (A).

4. Coating compositions according to one of claims 1 to 3, **characterized in that** they contain as component (C) phtalic anhydride, alkyl and/or alkoxy-substituted phtalic anhydride, a half ester of phtalic anhydride, a half ester of alkyl and/or alkoxy-substituted phtalic anhydride, benzoic acid or alkyl and/or alkoxysubstituted benzoic acid.

5. Process for the production of a protective and/or decorative coating on a substrate surface, **characterized in that** a coating composition according to one of claims 1 to 4 is applied.

6. Process according to claim 5 **characterized in that** the protective and/or decorative coating is a refinish coating.

## Patentansprüche

1. Beschichtungszusammensetzung, enthaltend als Komponente (A)
(A1) mindestens ein hydroxylgruppenhaltiges Polyester- oder Alkydharz und
(A2) mindestens ein hydroxylgruppenhaltiges Bindemittel, bei dem es sich um ein Polyacrylatharz handelt, das durch Polymerisation von
(a) 5 bis 50 Gew.-% eines oder mehrerer Monomere aus der Gruppe bestehend aus 4-Hydroxy-n-butylacrylat, 4-Hydroxy-nbutylmethacrylat, 3-Hydroxy-n-butylacrylat und/oder 3-Hydroxy-n-butylmethacrylat,
(b) 0 bis 50 Gew.-% eines von (a) verschiedenen ethylenisch ungesättigten, copolymerisierbaren Monomers, das Hydroxylgruppen enthält, oder eines Gemischs aus derartigen Monomeren,
(c) 5 bis 95 Gew.-% eines von (a) und (b) verschiedenen aliphatischen und/oder cycloaliphatischen Methacrylsäureund/oder Acrylsäureesters oder eines Gemischs aus derartigen Monomeren,
(d) 0 bis 30 Gew.-% eines von (a), (b) und (c) verschiedenen copolymerisierbaren Vinylesters oder eines Gemischs aus derartigen Monomeren,
(e) 0 bis 85 Gew.-% eines von (a), (b), (c) und (d) verschiedenen vinylaromatischen Kohlenwasserstoffs oder eines Gemischs aus derartigen Monomeren,
(f) 0 bis 10 Gew.-%, vorzugsweise 0 bis 8 Gew.-%, eines weiteren, von (a), (b), (c), (d) und (e) verschiedenen ethylenisch ungesättigten Monomers oder eines Gemischs aus derartigen Monomeren,
erhältlich ist, wobei die Summe der Gewichtsanteile der Monomere (a) bis (f) jeweils 100 Gew.-% beträgt,
(B) mindestens ein Di- und/oder Polyisocyanat als Vernetzer, und
(C) mindestens eine aromatische Mono- und/oder Polycarbonsäure und/oder mindestens ein Anhydrid einer aromatischen Mono- und/oder Polycarbonsäure.

2. Beschichtungszusammensetzung nach Anspruch 1, **dadurch gekennzeichnet, daß** sie
20 bis 60 Gew.-% des hydroxylgruppenhaltigen Polyester- oder Alkydharzes (A1) und
40 bis 80 Gew.-% des Polyacrylatharzes (A2), das zumindest teilweise in Gegenwart der Komponente (A1) hergestellt worden ist, enthält.

3. Beschichtungszusammensetzung nach Anspruch 1 oder 2, **dadurch gekennzeichnet, daß** die Menge der Komponente (C) 0,1 bis 2 Gew.-%, bezogen auf das Gewicht der Komponente (A), beträgt.

4. Beschichtungszusammensetzung nach einem der Änanrüche 1 bis 3, **dadurch gekennzeichnet, daß** sie als Komponente (C) Phthalsäureanhydrid, alkylund/oder alkoxysubstituiertes Phthalsäureanhydrid, einen Halbester von Phthalsäureanhydrid, einen Halbester von alkyl- und/oder alkoxysubstituiertem Phthalsäureanhydrid, Benzoesäure oder alkylund/oder alkoxysubstituierte Benzoesäure enthält.

5. Verfahren zur Herstellung eines schützenden und/oder dekorativen Überzugs auf einer Substratoberfläche, **dadurch gekennzeichnet, daß** man eine Beschichtungszusammensetzung nach einem der Ansprüche 1 bis 4 aufbringt.

6. Verfahren nach Anspruch 5, **dadurch gekennzeichnet, daß** es sich bei dem schützenden und/oder dekorativen Überzug um eine Reparaturlackierung handelt.

## Revendications

1. Compositions de revêtements comprenant, en tant que composant (A)
(A1) au moins une résine de polyester ou alkyde renfermant des groupes hydroxy et
(A2) au moins un liant renfermant des groupes hydroxy, qui est une résine de polyacrylate pouvant être obtenue en polymérisant
(a) de 5 à 50 % en poids d'un ou de plusieurs monomères choisis parmi le groupe constitué de l'acrylate de 4-hydroxy-n-butyle, du méthacrylate de 4-hydroxy-n-butyle, de .l'acrylate de 3-hydroxy-n-butyle et/ou du méthacrylate de 3-hydroxy-n-butyle,
(b) de 0 à 50 % en poids d'un monomère copolymérisable éthyléniquement insaturé qui est différent de (a) et renferme des groupes hydroxy, ou un mélange de tels monomères,
(c) de 5 à 95 % en poids d'un ester aliphatique et/ou cycloaliphatique de l'acide méthacrylique et/ou acrylique, qui est différent de (a) ou (b), ou un mélange de tels monomères,
(d) de 0 à 30 % en poids d'un ester vinylique copolymérisable qui est différent de (a), (b) ou (c), ou un mélange de tels monomères,
(e) de 0 à 85 % en poids d'un hydrocarbure vinylique aromatique qui est différent de (a), (b), (c) ou (d), ou un mélange de tels monomères, et
(f) de 0 à 10 % en poids, de préférence de 0 à 8 % en poids, d'un monomère éthyléniquement insaturé supplémentaire qui est différent de (a), (b), (c), (d) ou (e), ou un mélange de tels monomères,
la somme des proportions pondérales des monomères (a) à (f) étant dans chaque cas de 100 % en poids,
(B) au moins un agent de réticulation qui est un di-et/ou polyisocyanate,
(C) au moins un acide mono- et/ou polycarboxylique aromatique et/ou au moins un anhydride d'un acide mono- et/ou polycarboxylique aromatique.

2. Compositions de revêtements selon la revendication 1, **caractérisées en ce qu'**elles comprennent
de 20 à 60 % en poids de la résine de polyester ou alkyde (A1) renfermant des groupes hydroxy et
de 40 à 80 % en poids de la résine de polyacrylate (A2) qui a été préparée, au moins en partie, en présence du composant (A1).

3. Compositions de revêtements selon l'une quelconque des revendications 1 ou 2, **caractérisées en ce que** la quantité de composant (C) est de 0,1 à 2 % en poids, par rapport au poids du composant (A).

4. Compositions de revêtements selon l'une quelconque des revendications 1 à 3, **caractérisées en ce qu'**elles comprennent, en tant que composant (C), de l'anhydride phtalique, de l'anhydride phtalique alkyl- et/ou alcoxy-substitué, un monoester de l'anhydride phtalique, un monoester d'anhydride phtalique alkyl-et/ou alcoxy-substitué, de l'acide benzoïque ou de l'acide benzoïque alkyl- et/ou alcoxy-substitué.

5. Procédé de production d'un revêtement protecteur et/ou décoratif sur une surface de substrat, **caractérisé en ce qu'**une composition de revêtement selon l'une quelconque des revendications 1 à 4 est appliquée.

6. Procédé selon la revendication 5, **caractérisé en ce que** le revêtement protecteur et/ou décoratif est un revêtement de retouches.
